# EUROPEAN PATENT APPLICATION

(11) **EP 4 283 186 A1**
(43) Date of publication of application: **29.11.2023**
(21) Application number: 21920302.3
(22) Date of filing: 22.01.2021
(51) Int. Cl.: F21S 43/00, B60Q 3/217, B60Q 3/51

(54) **HEADLIGHT PROJECTION SYSTEM AND VEHICLE**

(71) Applicant: Zhejiang Smart Intelligence Technology Co., Ltd., Ningbo, Zhejiang 315336 (CN)
(72) Inventor: YANG, Jun, Hangzhou Bay New District, Ningbo, Zhejiang 315336 (CN); FU, Qiang, Hangzhou Bay New District, Ningbo, Zhejiang 315336 (CN); LOU, Longhai, Hangzhou Bay New District, Ningbo, Zhejiang 315336 (CN); HAO, Lixia, Hangzhou Bay New District, Ningbo, Zhejiang 315336 (CN); CHEN, Xiaolei, Hangzhou Bay New District, Ningbo, Zhejiang 315336 (CN); GUO, Yanfeng, Hangzhou Bay New District, Ningbo, Zhejiang 315336 (CN); YU, AiQuan, Hangzhou Bay New District, Ningbo, Zhejiang 315336 (CN)
(74) Representative: Zaboliene, Reda
(86) International application number: PCT/CN2021/073346
(87) International publication number: WO 2022/155904

(57) **Abstract**

A headlight projection system and a vehicle, the headlight projection system comprising a first motor (1), a fixing bracket (2), a projection lamp (3), a focusing apparatus, and a controller (4); the first motor (1) is fixedly connected to the projection lamp (3) by means of the fixing bracket (2); the controller (4) comprises an information collection unit (41), a processing unit (42), and a motor control unit (43); the information collection unit (41) is used for acquiring playback data and state data of the projection lamp (3); the processing unit (42) is respectively electrically connected to the information collection unit (41), the projection lamp (3), and the motor control unit (43), and the processing unit (42) is used for acquiring playback data; the motor control unit (43) is electrically connected to the first motor (1); the focusing apparatus is connected to the projection lamp (3), and the focusing apparatus is respectively electrically connected to the information collection unit (41) and the projection lamp (3); by means of the motor control unit (43) controlling the first motor (1) to drive the projection lamp (3) to rotate, the present headlight projection system can implement projection on a wall or vertical screen above 0° horizontally and can also implement projection on a road surface below 0° horizontally, such that the projection lamp (3) is suitable for use in different scenarios.

## Description

### TECHNICAL FIELD

The present application relates to the technical field of automobiles, and in particular, to a vehicle lamp projection system and a vehicle.

### BACKGROUND

Automotive industry is developing rapidly, and people's economic strength is constantly improving. Pursuits for cars are not only limited to performance, and better riding experience will be an important measure for consumers when purchasing cars.

After recent years of development, car projection lights, as decorative lights, have gradually become the standard configuration for mid to high-end cars. Car welcome projection lights mounted on inner sides of the car doors have become very common in the market, and welcome projection lights mounted on car lights have also gradually emerged. However, a projection angle of an existing welcome projection light is fixed and unchangeable. Multiple different models of the same car series will all use accessories with the same structure, while different models have different mounting heights and will have different projection angles. This will result in that it is difficult for the same type of welcome projection light to achieve full adaption for angles when being mounted on different models, use experience of customer is affected, and diverse needs of customers cannot be met.

Based on the shortcomings existing in the prior art, there is an urgent need to research a vehicle lamp projection system and a vehicle to solve the above problems.

### SUMMARY OF THE DISCLOSURE

In order to solve the above technical problems, the present application provides a vehicle lamp projection system and a vehicle. In the present application, by using a motor control unit to control a first motor to drive a projection lamp to rotate, not only can projection on a wall or a vertical screen above horizontal 0° be implemented, but also projection on a road surface below horizontal 0° can be implemented, such that the projection lamp is suitable for use in different scenarios. Moreover, by using an information collection unit to acquire playback data and state data of the projection lamp, it is enabled to project users' preferred patterns, text, logos, videos, and so on, and thus experience of customers is improved.

The present application discloses a vehicle lamp projection system comprising a first motor, a fixing bracket, a projection lamp, a focusing apparatus, and a controller; wherein the first motor is fixedly connected to the projection lamp through the fixing bracket; the controller comprises an information collection unit, a processing unit, and a motor control unit; the information collection unit is configured for acquiring playback data and state data of the projection lamp; the processing unit is electrically connected to the information collection unit, the projection lamp, and the motor control unit respectively, and the processing unit is configured for acquiring the playback data collected by the information collection unit; the motor control unit is electrically connected to the first motor, and the motor control unit is configured for controlling the first motor to drive the projection lamp to rotate; the focusing apparatus is connected to the projection lamp, and the focusing apparatus is electrically connected to the information collection unit and the projection lamp respectively, the focusing apparatus is configured for adjusting a focal distance of the projection lamp based on the state data of the projection lamp.

Furthermore, the focusing apparatus comprises a first focusing assembly and a second focusing assembly; both the first focusing assembly and the second focusing assembly are electrically connected to the motor control unit, the first focusing assembly is configured for focusing the projection lamp in a first direction, the second focusing assembly is configured for focusing the projection lamp in a second direction.

Furthermore, the first focusing assembly comprises a second motor and a first focusing structure, the first focusing structure are respectively connected to the projection lamp and the second motor, the second motor is configured for focusing the projection lamp in the first direction through the first focusing structure.

Furthermore, the second focusing assembly comprises a third motor and a second focusing structure, the second focusing structure are respectively connected to the projection lamp and the third motor, the third motor is configured for focusing the projection lamp in the second direction through the second focusing structure.

Furthermore, a power supply unit is further included, the power supply unit supplies power to the first motor, the second motor, the third motor, and the projection lamp.

Furthermore, the information collection unit comprises a Bluetooth module, a WIFI module, an internet module, and a distance sensor; the Bluetooth module, the WIFI module, the internet module, and the distance sensor are all electrically connected to the processing unit; the processing unit acquires the playback data through the Bluetooth module, the WIFI module, and the internet module, wherein the playback data are images or video signals; and the processing unit acquires a projection distance between the projection lamp and a surface to be projected through the distance sensor.

Furthermore, the projection lamp comprises a casing, a light source, and a lens, both the light source and the lens are arranged in the casing, the casing is provided with a connection member, and the casing is connected to the fixing bracket through the connection member.

Furthermore, an audio output module and a sound playing device are further included; both the audio output module and the sound playing device are electrically connected to the processing unit, the processing unit transmits audio data collected from the audio output module to the sound playing device, and the sound playing device is configured for playing the audio data.

Furthermore, a memory and a map unit are further included; the memory and the map unit are electrically connected to the processing unit respectively, the processing unit is configured for acquiring data stored in the memory and data in the map unit.

Furthermore, a speed detection unit is included; the speed detection unit is electrically connected to the processing unit, the speed detection unit is configured for detecting a speed of a vehicle, and when the speed of the vehicle is not less than a preset speed value, sending a first closing signal to the processing unit.

Furthermore, an electricity detection unit is included; the electricity detection unit is electrically connected to the processing unit, the electricity detection unit is configured for detecting remained electricity of a power supply unit of a vehicle, and when the remained electricity of the vehicle is not less than a preset electricity value, sending a second closing signal to the processing unit.

Furthermore, the projection lamp is electrically connected to the power supply unit, when the processing unit receives the second closing signal, the power supply unit is disconnected from the projection lamp.

The present application further protects a vehicle comprising a vehicle lamp projection system according to any one of the above.

Implementation of embodiments of the present application has the following advantageous effect: 1. in the present application, by using a motor control unit to control a first motor to drive a projection lamp to rotate, not only can projection on a wall or a vertical screen above horizontal 0° be implemented, but also projection on a road surface below horizontal 0° can be implemented, such that the projection lamp is suitable for use in different scenarios; moreover, by using an information collection unit to acquire playback data and state data of the projection lamp, it is enabled to project users' preferred patterns, text, logos, videos, and so on, and thus experience of customers is improved; 2. in the present application, by providing a Bluetooth module, a WIFI module, and an internet module to transmit playback data, so that high-speed transmission of the playback data can be realized by the above modules, thereby transmitting the playback data in real time/dynamically.

### BRIEF DESCRIPTION OF THE DRAWINGS

In order to explain technical solutions of the present application more clearly, drawings required to be used in description of embodiments or of the prior art will be briefly introduced below. It is obvious that the drawings in the following description are only some embodiments of the present application. For those skilled in the art, other drawings can be obtained according to these drawings without paying creative work.
FIG. 1 is a structural diagram of a vehicle lamp projection system of an embodiment;
FIG. 2 is a structural diagram of a controller of an embodiment;
FIG. 3 is a structural diagram of a controller of another embodiment;
FIG. 4 is a structural diagram of an information collection unit of an embodiment;
FIG. 5 is a structural diagram of a first projection state of a vehicle lamp projection system of an embodiment;
FIG. 6 is a structural diagram of a second projection state of a vehicle lamp projection system of an embodiment.

Among them, the figure reference numbers in the drawings are in correspondence with the following: 1-first motor; 2-fixing bracket; 3-projection lamp; 4-controller; 41-information collection unit; 42-processing unit; 43-motor control unit; 44-audio output module; 45-sound playing device; 46-memory; 47-map unit; 48-speed detection unit; 49-electricity detection unit; 411-Bluetooth module; 412-WIFI module; 413-internet module; 414-distance sensor.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work belongs to the protection scope of the present application.

It should be noted that the terms "first", "second", and the like in the description and claims of the present application, as well as the accompanying drawings, are used to distinguish similar objects and do not need to be used to describe a specific order or sequence. It should be understood that data used in this way may be interchanged in appropriate cases, so that embodiments of the present application described here can be implemented in orders other than those illustrated or described here. In addition, the terms "include" and "have", as well as any variations thereof, are intended to cover non-exclusive inclusion. For example, a process, method, system, product, or device that includes a series of steps or units need not be limited to those clearly listed steps or units, but may include other steps or units that are not clearly listed or inherent to these processes, methods, products, or devices.

The prior art has the following defect: a projection angle of an existing welcome projection light is fixed and unchangeable; multiple different models of the same car series will all use accessories with the same structure, while different models have different mounting heights and will have different projection angles. This will result in that it is difficult for the same type of welcome projection light to achieve full adaption for angles when being mounted on different models, use experience of customer is affected, and diverse needs of customers cannot be met.

Aiming at the defect of the prior art, in the present application, by using a motor control unit to control a first motor to drive a projection lamp to rotate, not only can projection on a wall or a vertical screen above horizontal 0° be implemented, but also projection on a road surface below horizontal 0° can be implemented, such that the projection lamp is suitable for use in different scenarios; moreover, by using an information collection unit to acquire playback data and state data of the projection lamp, it is enabled to project users' preferred patterns, text, logos, videos, and so on, and thus experience of customers is improved.

### Embodiment 1

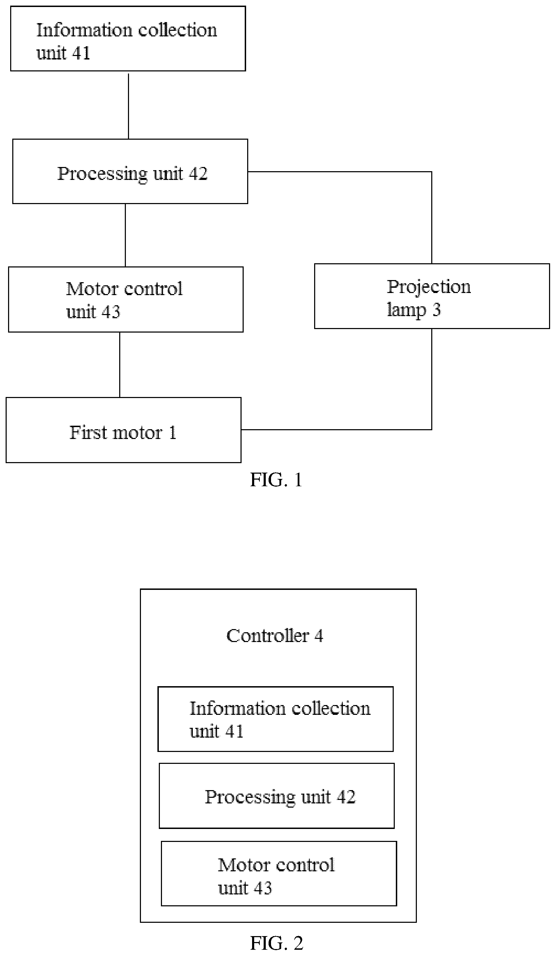

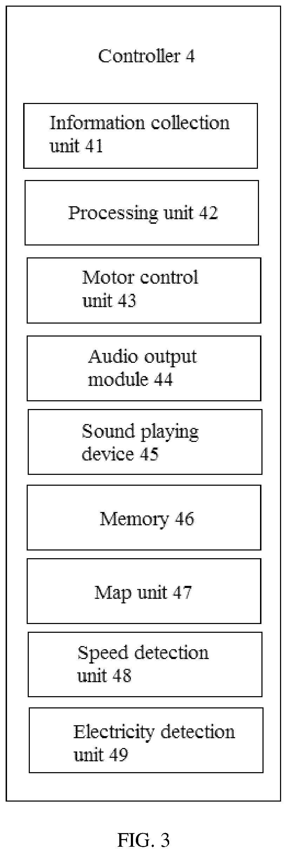

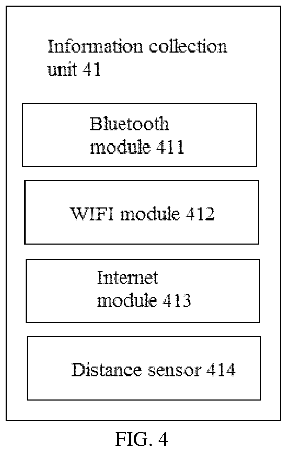

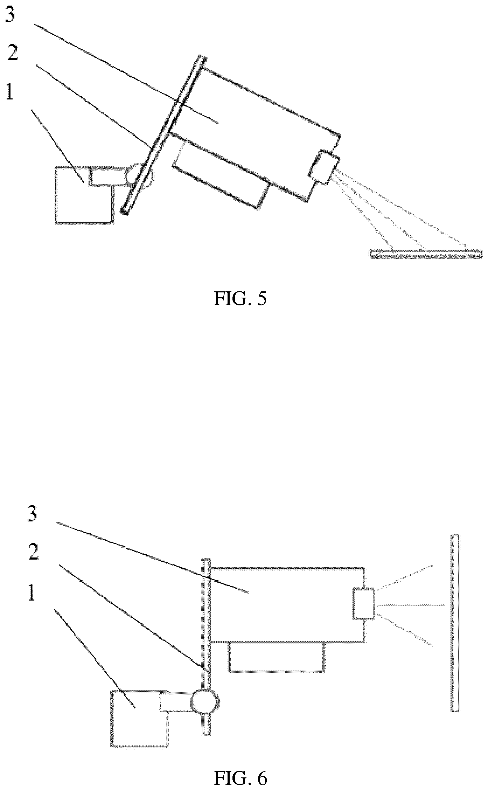

Referring to FIG. 1-FIG. 6, this embodiment provides a vehicle lamp projection system and a vehicle. The vehicle lamp projection system includes a first motor 1, a fixing bracket 2, a projection lamp 3, a focusing apparatus, and a controller 4; the first motor 1 is fixedly connected to the projection lamp 3 through the fixing bracket 2; the controller 4 includes an information collection unit 41, a processing unit 42, and a motor control unit 43; the information collection unit 41 is configured for acquiring playback data and state data of the projection lamp 3; the processing unit 42 is respectively electrically connected to the information collection unit 41, the projection lamp 3, and the motor control unit 43, and the processing unit 42 is configured for acquiring the playback data collected by the information collection unit 41; the motor control unit 43 is electrically connected to the first motor 1, and the motor control unit 43 is configured for controlling the first motor 1 to drive the projection lamp 3 to rotate; the focusing apparatus is connected to the projection lamp 3, and the focusing apparatus is respectively electrically connected to the information collection unit 41 and the projection lamp 3, the focusing apparatus is configured for adjusting a focal distance of the projection lamp 3 based on the state data of the projection lamp 3.

It should be noted that, by using the motor control unit 43 to control the first motor 1 to drive the projection lamp 3 to rotate, not only can projection on a wall or a vertical screen above horizontal 0° be implemented, but also projection on a road surface below horizontal 0° can be implemented, such that the projection lamp 3 is suitable for use in different scenarios; moreover, by using the information collection unit 41 to acquire playback data and state data of the projection lamp 3, it is enabled to project users' preferred patterns, text, logos, videos, and so on, and thus experience of customers is improved.

It should be further noted that, in this embodiment, a first state is defined as projection on a wall or a vertical screen above horizontal 0°, and a second state is defined as projection on a road surface below horizontal 0°.

It should be further noted that the projection lamp 3 is provided in a front headlight or arranged as a separate module.

In some possible embodiments, the projection lamp 3 is arranged on a front grid of a vehicle.

Preferably, the focusing apparatus includes a first focusing assembly and a second focusing assembly; both the first focusing assembly and the second focusing assembly are electrically connected to the motor control unit 43, the first focusing assembly is configured for focusing the projection lamp 3 in a first direction, the second focusing assembly is configured for focusing the projection lamp 3 in a second direction.

It should be noted that, in this embodiment, the first direction is defined as an axis direction of the projection lamp 3, and the second direction is defined as a diameter direction of the projection lamp 3.

Preferably, the first focusing assembly includes a second motor and a first focusing structure, the first focusing structure are respectively connected to the projection lamp 3 and the second motor, the second motor is configured for focusing the projection lamp 3 in the first direction through the first focusing structure.

Specifically, the first focusing structure can be a screw structure, one end of the screw structure is connected to the second motor, another end of the screw structure is connected to the projection lamp 3, and the second motor drives the screw structure to rotate.

Preferably, the second focusing assembly includes a third motor and a second focusing structure, the second focusing structure are respectively connected to the projection lamp 3 and the third motor, the third motor is configured for focusing the projection lamp 3 in the second direction through the second focusing structure.

In some possible embodiments, the second motor and the third motor are fixed relative to the first motor; the first motor is configured for driving the projection lamp 3 to rotate; the second motor is configured for adjusting the projection lamp 3 along an axis direction of the projection lamp 3 after the first motor 1 drives the projection lamp 3 to rotate, and further adjusting the projection lamp 3 along a diameter direction of the projection lamp 3, thereby implementing adjusting processing for the projection lamp 3.

Specifically, the second focusing structure can be a screw structure, one end of the screw structure is connected to the third motor, another end of the screw structure is connected to the projection lamp 3, and the third motor drives the screw structure to rotate.

Preferably, a power supply unit is further included, the power supply unit supplies power to the first motor 1, the second motor, the third motor, and the projection lamp 3.

Specifically, the power supply unit includes a battery, the battery supplies power to the first motor 1, the second motor, the third motor, and the projection lamp 3 respectively.

Preferably, the information collection unit 41 includes a Bluetooth module 411, a WIFI module 412, an internet module 413, and a distance sensor 414; the Bluetooth module 411, the WIFI module 412, the internet module 413, and the distance sensor 414 are all electrically connected to the processing unit 42; the processing unit 42 acquires the playback data through the Bluetooth module 411, the WIFI module 412, and the internet module 413, wherein the playback data are images or video signals; and the processing unit 42 acquires a projection distance between the projection lamp 3 and a surface to be projected through the distance sensor 414. By providing the Bluetooth module, the WIFI module, and the internet module to transmit the playback data, so that high-speed transmission of the playback data can be realized by the above modules, thereby transmitting the playback data in real time/dynamically.

Specifically, the distance sensor 414 is configured for acquiring a projection distance between the projection lamp 3 and a surface to be projected, and sends the projection distance to the processing unit 42.

In some possible embodiments, the distance sensor 414 is a radar or an electronic map.

Preferably, the projection lamp 3 comprises a casing, a light source, and a lens, both the light source and the lens are arranged in the casing, the casing is provided with a connection member, and the casing is connected to the fixing bracket 2 through the connection member.

Specifically, the connection member is an engagement structure, and the casing is connected to the fixing bracket 2 through the engagement structure.

In some possible embodiments, the light source is an RGB LED; by providing the RGB LED as the light source for the projection lamp 3, playback of full color videos is implemented, and users' experience is improved.

Preferably, the controller 4 further includes an audio output module 44 and a sound playing device 45; both the audio output module 44 and the sound playing device 45 are electrically connected to the processing unit 42, the processing unit 42 transmits audio data collected from the audio output module 44 to the sound playing device 45, and the sound playing device 45 is configured for playing the audio data.

Preferably, the controller 4 further includes a memory 46 and a map unit 47, the memory 46 and the map unit 47 are respectively electrically connected to the processing unit 42, the processing unit 42 is configured for acquiring data stored in the memory 46 and data in the map unit 47.

In some possible embodiments, the memory 46 can also store users' favorite images or videos; the memory 46 can send the images or videos to the processing unit 42, and they are projected by the projection lamp 3.

Preferably, the controller 4 further includes a speed detection unit 48; the speed detection unit 48 is electrically connected to the processing unit 42, the speed detection unit 48 is configured for detecting a speed of a vehicle, and when the speed of the vehicle is not less than a preset speed value, sending a first closing signal to the processing unit 42.

In some possible embodiments, when the speed detection unit 48 detects that a speed of a vehicle is not less than a preset speed value, it determines that the vehicle is driving at a high speed, and sends a first closing signal to the processing unit 42 at this time; the processing unit 42 controls the projection function of the projection lamp 3 to be closed.

Preferably, the controller 4 further includes an electricity detection unit 49; the electricity detection unit 49 is electrically connected to the processing unit 42, the electricity detection unit 49 is configured for detecting remained electricity of a power supply unit of a vehicle, and when the remained electricity of the vehicle is not less than a preset electricity value, sending a second closing signal to the processing unit 42.

In some possible embodiments, when the electricity detection unit 49 detects that a speed of a vehicle is not less than a preset electricity value, it determines that the electricity of the vehicle is low and insufficient to support playback, and sends a second closing signal to the processing unit 42 at this time; the processing unit 42 controls the projection function of the projection lamp 3 to be closed.

In some possible embodiment, the controller 4 further includes a calculation unit, the calculation unit is electrically connected to the electricity detection unit 49, the processing unit 42, and the information collection unit 41 respectively; the calculation unit is configured for acquiring a video time length when playing a video and calculating consumed electricity; the consumed electricity is compared with remained electricity of a vehicle, and when the consumed electricity is larger than the remained electricity, the second closing signal is sent to the processing unit 42.

Preferably, the projection lamp 3 is electrically connected to the power supply unit, when the processing unit 42 receives the second closing signal, the power supply unit is disconnected from the projection lamp 3.

In some possible embodiments, the controller 4 further includes a memorizing unit, the memorizing unit is electrically connected to the processing unit; the memorizing unit is configured for storing previously setting parameters of a user, and sending the setting parameters to the processing unit; the processing unity can adjust the projection lamp 3 based on the setting parameters, such that it can achieve a proper projection position rapidly and facilitate users' watching.

Another aspect of the present application protects a vehicle including the aforementioned vehicle lamp projection system.

Although the present application has been described through preferred embodiments, the present application is not limited to the embodiments described herein and further includes various changes and variations made without departing from the scope of the present application.

In this specification, related directional words "front", "back", "up", "down", and so on are defined based on positions of components in the figures and between the components, and are just for clarity and convenience of expressing the technical solution. It should be understood that use of the directional words should not limit the protection scope requested by the present application.

In this specification, the above embodiments and the features in the embodiments can be combined with each other in the condition of no conflict.

The above disclosure is only a preferred embodiment of the present application, and of course, it should not be used to limit the scope of claims of the present application. Therefore, any equivalent change made according to the claims of the present application still fall within the scope covered by the present application.

## Claims

1. A vehicle lamp projection system comprising a first motor (1), a fixing bracket (2), a projection lamp (3), a focusing apparatus, and a controller (4); wherein the first motor (1) is fixedly connected to the projection lamp (3) through the fixing bracket (2); the controller (4) comprises an information collection unit (41), a processing unit (42), and a motor control unit (43); the information collection unit (41) is configured for acquiring playback data and state data of the projection lamp (3); the processing unit (42) is electrically connected to the information collection unit (41), the projection lamp (3), and the motor control unit (43) respectively, and the processing unit (42) is configured for acquiring the playback data collected by the information collection unit (41); the motor control unit (43) is electrically connected to the first motor (1), and the motor control unit (43) is configured for controlling the first motor (1) to drive the projection lamp (3) to rotate; the focusing apparatus is connected to the projection lamp (3), and the focusing apparatus is electrically connected to the information collection unit (41) and the projection lamp (3) respectively, the focusing apparatus is configured for adjusting a focal distance of the projection lamp (3) based on the state data of the projection lamp (3).

2. The vehicle lamp projection system according to claim 1, wherein the focusing apparatus comprises a first focusing assembly and a second focusing assembly; both the first focusing assembly and the second focusing assembly are electrically connected to the motor control unit (43), the first focusing assembly is configured for focusing the projection lamp (3) in a first direction, the second focusing assembly is configured for focusing the projection lamp (3) in a second direction.

3. The vehicle lamp projection system according to claim 2, wherein the first focusing assembly comprises a second motor and a first focusing structure, the first focusing structure are respectively connected to the projection lamp (3) and the second motor, the second motor is configured for focusing the projection lamp (3) in the first direction through the first focusing structure.

4. The vehicle lamp projection system according to claim 3, wherein the second focusing assembly comprises a third motor and a second focusing structure, the second focusing structure are respectively connected to the projection lamp (3) and the third motor, the third motor is configured for focusing the projection lamp (3) in the second direction through the second focusing structure.

5. The vehicle lamp projection system according to claim 4, further comprising a power supply unit, the power supply unit supplies power to the first motor (1), the second motor, the third motor, and the projection lamp (3).

6. The vehicle lamp projection system according to claim 1, wherein the information collection unit (41) comprises a Bluetooth module (411), a WIFI module (412), an internet module (413), and a distance sensor (414); the Bluetooth module (411), the WIFI module (412), the internet module (413), and the distance sensor (414) are all electrically connected to the processing unit (42); the processing unit (42) acquires the playback data through the Bluetooth module (411), the WIFI module(412), and the internet module (413), wherein the playback data are images or video signals; and the processing unit (42) acquires a projection distance between the projection lamp (3) and a surface to be projected through the distance sensor (414).

7. The vehicle lamp projection system according to claim 1, wherein the projection lamp (3) comprises a casing, a light source, and a lens, both the light source and the lens are arranged in the casing, the casing is provided with a connection member, and the casing is connected to the fixing bracket (2) through the connection member.

8. The vehicle lamp projection system according to claim 1, further comprising an audio output module (44) and a sound playing device (45); both the audio output module (44) and the sound playing device (45) are electrically connected to the processing unit (42), the processing unit (42) transmits audio data collected from the audio output module (44) to the sound playing device (45), and the sound playing device (45) is configured for playing the audio data.

9. The vehicle lamp projection system according to claim 1, further comprising a memory (46) and a map unit (47); the memory (46) and the map unit (47) are electrically connected to the processing unit (42) respectively, the processing unit (42) is configured for acquiring data stored in the memory (46) and data in the map unit (47).

10. The vehicle lamp projection system according to claim 1, further comprising a speed detection unit (48); the speed detection unit (48) is electrically connected to the processing unit (42), the speed detection unit (48) is configured for detecting a speed of a vehicle, and when the speed of the vehicle is not less than a preset speed value, sending a first closing signal to the processing unit (42).

11. The vehicle lamp projection system according to claim 5, further comprising an electricity detection unit (49); the electricity detection unit (49) is electrically connected to the processing unit (42), the electricity detection unit (49) is configured for detecting remained electricity of a power supply unit of a vehicle, and when the remained electricity of the vehicle is not less than a preset electricity value, sending a second closing signal to the processing unit (42).

12. The vehicle lamp projection system according to claim 11, wherein the projection lamp (3) is electrically connected to the power supply unit, when the processing unit (42) receives the second closing signal, the power supply unit is disconnected from the projection lamp (3).

13. A vehicle comprising a vehicle lamp projection system according to any one of claims 1-12.
